# EUROPÄISCHE PATENTSCHRIFT

(11) **EP 4 494 438 B1**
(45) Veröffentlichungstag und Bekanntmachung des Hinweises auf die Patenterteilung: **19.11.2025**
(21) Anmeldenummer: 24170562.3
(22) Anmeldetag: 16.04.2024
(51) Int. Cl.: A01D 34/67, A01D 34/82, A01D 34/00, A01D 34/68

(54) **ELEKTRO-RASENMÄHER MIT EINHANDFÜHRUNGSSTANGE**
ELECTRIC LAWN MOWER WITH ONE-HAND GUIDE BAR
TONDEUSE À GAZON ÉLECTRIQUE AVEC TIGE DE GUIDAGE D'UNE SEULE MAIN

(30) Priorität: 18.04.2023 DE 202023101990 U
(43) Veröffentlichungstag der Anmeldung: 22.01.2025
(73) Patentinhaber: AL-KO Geräte GmbH, 89359 Kötz (DE)
(72) Erfinder: Dietrich, Jürgen, 89250 Senden (DE); Munkenast, Gert, 89346 Bibertal (DE); Stegbauer, Johannes, 89438 Weisingen (DE); Vogel, Markus, 89359 Kötz (DE)
(74) Vertreter: ERNICKE Patent- und Rechtsanwälte PartmbB

(56) Entgegenhaltungen:
- US-A- 3 382 653
- US-A- 3 774 379

## Beschreibung

Die Erfindung liegt auf dem Gebiet der Rasenmäher für die Verwendung in Kleingärten.

Es bestehen fortlaufende Trends zur Verwendung von batteriebetriebenen Rasenmähern in Stadtgärten. Diese Art von Gärten ist oft gekennzeichnet durch eine relativ kleine zu mähende Rasenfläche, die durch andere Objekte wie Bepflanzungen, insbesondere Büsche, oder dekorative Gegenstände durchsetzt sein kann. Dementsprechend bedarf es immer besser manövrierbarer Rasenmäher. Andererseits steht häufig nur wenig Stauraum für die Unterbringung von Gartengeräten zur Verfügung, sodass ein Bedarf besteht für kleine, handliche und möglich platzsparend unterbringbare Geräte.

Bisher bekannte Rasenmäher sind für diese Anforderungen nicht optimal ausgebildet.

US 2011 / 0 179 757 A1 und EP 0 981 946 A2 offenbaren einen Rasentrimmer und einen Rasenmäher, die ohne Räder auskommen und über ein Luftkissen über dem Rasen geführt werden. Solche Geräte haben keinerlei Seitenführung, sodass sie stark dazu tendieren an jeglicher Unebenheit im Rasen seitlich abzugleiten, sodass sie in der Praxis zwangsweise mit zwei Händen geführt werden müssen. Außerdem führt das Luftkissen dazu, dass die zu schneidenden Grashalme auf die Rasenoberfläche gepresst werden, noch bevor sie das Schneidmittel erreichen, was einen effektiven Rasenschnitt behindert oder sogar unmöglich macht. Weiterhin führt das Luftkissen dazu, dass der Rasenschnitt zwischen die noch stehenden Halme in Richtung des Untergrunds gepresst wird, was mit der Zeit zu einer mangelnden Bodenbelüftung und damit zu erheblichen Nachteilen im Rasenwuchs führt.

Aus US 7 216 471 B1 ist ein Rasenkanten-Trimmer mit einer starren Verbindung zwischen einer Griffstange und einer an deren Ende angeordneten Rotationsdraht-Schneidkammer bekannt, wobei der Rasenkanten-Trimmer über eine vorgesehene Schnittstellengeometrie an der Schneidkammer temporär in ein separates Fahrgehäuse einsetzbar ist. Das Fahrgehäuse ist mit vier starren, d.h. nicht lenkbaren Rädern an seinen Ecken ausgestattet. Durch das Einsetzen des Rasenkanten-Trimmers in das Fahrgehäuse wird eine Vorrichtung gebildet, die einem üblichen Handrasenmäher nachgebildet ist. Dieses Gerät weist durch die vier starren Räder eine ungünstige Manövrierbarkeit und nur eine mäßige Schnittgüte auf, denn das Rotationsdraht-Schneidwerk eines Trimmers ist nicht für das Mähen größerer Flächen ausgelegt.

WO 2022 259 059 A1 zeigt einen batteriebetriebenen Rasenmäher mit einem im Wesentlichen quaderförmigen Fahrgehäuse, das ebenfalls vier starre, d.h. nicht lenkbare Räder an seinen Ecken aufweist. Etwa in der Mitte der Deckseite des Fahrgehäuses, d.h. in Längsrichtung des Rasenmähers zwischen der vorderen und der hinteren Radachse, ist über ein Gelenk eine Griffstange angeordnet, die um eine im Wesentlichen horizontale Achse schwenkbar ist, die parallel zu den Radachsen verläuft.

DE 10 2018 132 677 A1 zeigt eine ganz ähnliche Ausführung eines Rasenmähers, bei der allerdings die beiden hinteren Räder deutlich kleiner und schmaler ausgeführt sind als die Vorderräder. Die hinteren Räder sind als radialfest miteinander verbundene Auflagebereiche eines Walzenkörpers ausgebildet. Alle vier Räder sind starr angeordnet.

Aus DE 10 2004 057 043 A1 ist ein handgeführter Rasenmäher bekannt, der eine erste und eine zweite Baugruppe umfasst, die zum Lenken des Rasenmähers gegeneinander um eine vertikale Schwenkachse gelagert sind.

DE 10 2005 026 250 A1 schlägt einen Rasenmäher vor, bei dem nur ein einziges Vorderrad vorgesehen ist, das im Zentrum der Arbeitsfläche des Messerbalkens an einem gehäusefesten Ständer angeordnet ist.

US 3 382 653 A offenbart einen Rasenmäher mit einem einzelnen Vorderrad und zwei lenkbaren Hinterrädern, die über eine gemeinsames horizontales Verbindungsglied gekoppelt sind. Das Verbindungsglied trägt mittig einen Stift, der im Freiraum eines Gabelmitnehmers geführt ist. Der Gabelmitnehmer steht seitlich von Führungsstange ab, die um einer schräg nach hinten oben gerichtete Achse drehbar ist. Bei einer Drehung der Führungsstange wird der Gabelmitnehmer um die Achse mit verschwenkt, wobei er den Führungsstift in Horizontalrichtung nach links oder rechts drängt, sodass das Verbindungsglied nach links oder rechts verschoben wird und die beiden Hinterräder auslenkt.

US 3 774 379 A offenbart einen elektrischen Rasenmäher, umfassend ein Fahrgehäuse und eine gelenkig mit dem Fahrgehäuse verbundene Griffstange gemäß dem Oberbegriff des Anspruchs 1.

Es hat sich gezeigt, dass keine der vorgenannten Ausbildungen für einen tatsächlich einhändig geführten Betrieb nutzbar sind. Für die Durchführung einer Lenkbewegung sind ganz erhebliche Kräfte aufzubringen, um die starren Räder unter Überwindung der Seitenführungskräfte zu einem Rotations-Rutschen auf Rasenflächen zu bringen. Ferner ist die Genauigkeit der Manövrierung ungenügend, weil die vorbekannten Rasenmäher kein einheitliches Lenkverhalten haben. Je nach momentaner Beschaffenheit des jeweiligen Untergrunds unter den vier Rädern ändert sich das Lenkverhalten, sodass die Bediener häufig das Gerät über die Griffstange komplett vom Untergrund abheben müssen, um eine exakte Positionierung über einem zu mähenden Bereich zu erzielen.

Es ist Aufgabe der vorliegenden Erfindung, einen verbesserten elektrischen Rasenmäher mit einer Einhand-Führungsstange aufzuzeigen.

Die Erfindung löst diese Aufgabe durch die Kennzeichenmerkmale des Hauptanspruchs.

Der elektrische Rasenmäher gemäß der vorliegenden Offenbarung umfasst ein Fahrgehäuse und eine gelenkig mit dem Fahrgehäuse verbundene Griffstange. Das Fahrgehäuse hat ein in der vorgesehenen Fahrtrichtung nach vorne weisendes Frontende und ein nach hinten weisendes Rückende, zwischen denen ein Mähwerk angeordnet ist. Das Fahrgehäuse weist ferner am Frontende zur linken Seite ein erstes starres Vorderrad, d.h. ein nicht lenkbares Vorderrad, und zur rechten Seite ein zweites starres Vorderrad, d.h. ein weiteres nicht lenkbares Vorderrad auf, die jeweils um eine quer zur vorgesehenen Fahrtrichtung ausgerichtete erste Drehachse drehbar sind. Die erste Drehachse ist insbesondere horizontal ausgerichtet.

Erfindungsgemäß weist das Fahrgehäuse am Rückende einen lenkbaren Nachlauf-Radträger auf, der um eine vertikale Lenkachse gegenüber dem Fahrgehäuse schwenkbar gelagert ist, wobei an dem Nachlauf-Radträger mind. ein Hinterrad auf einer zweiten horizontalen Drehachse drehbar gelagert ist. Die zweite Drehachse ist an dem Nachlauf-Radträger um einen Achsversatz gegenüber der Lenkachse windschief versetzt angeordnet. Weiterhin ist die Griffstange über ein Bügelgelenk mit einer im Wesentlichen horizontalen Schwenkachse an dem Fahrgehäuse schwenkbar gelagert und ferner ist die Griffstange über ein Kippgelenk mit dem Bügelgelenk verbunden.

Die vorgenannte Kombination aus einerseits einer kipp- und schwenkbar gelagerten Griffstange und andererseits einem durch den Nachlauf-Radträger lenkbar angeordneten Hinterrad führt zu einer deutlich verbesserten Manövrierbarkeit des elektrischen Rasenmähers. Da nur zwei zueinander koaxial und starr angeordnete Räder, nämlich die Vorderräder, vorgesehen sind, während das mindestens eine Hinterrad über den Nachlauf-Radträger lenkbar angeordnet ist, kann der elektrische Rasenmäher in beliebigen Kurvenbahnen oder sogar in einer reinen Rotation bewegt werden, ohne dass ein Rutschen oder Gleiten unter Überwindung der Seitenführungskräfte irgendeines Rades herbeigeführt werden muss. Dementsprechend liegt ein Momentanpol des Rotationsanteils jeder Fahrbewegung definiert auf einer gedachten Geraden, die durch die Radaufstandspunkte der Vorderräder verläuft.

Der elektrische Rasenmäher gemäß der vorliegenden Offenbarung ist daher besonders gut für das Mähen von nur schwer zugänglichen oder verwinkelten Rasenstücken in kleinen Stadtgärten geeignet. Die Beweglichkeit des elektrischen Rasenmähers ist für eine Bedienperson sofort erfühlbar und eindeutig verständlich. Der in der Benutzung für die Bedienperson entstehende Kraftaufwand ist in Folge der verbesserten Manövrierbarkeit deutlich reduziert, so dass eine echte Einhandbedienung möglich ist und auch für das Erreichen schwer zugänglicher oder verwinkelter Rasenstücke kein Anheben und kein Querschieben mit erhöhtem Kraftaufwand erforderlich sind.

Weitere vorteilhafte Ausbildungen der Erfindung sind in den Unteransprüchen und der nachfolgenden Zeichnungsbeschreibung angegeben.

Die Erfindung ist in den Zeichnungen beispielhaft und schematisch dargestellt. Diese zeigen:
- Figuren 1 bis 3:: Schrägbildansichten eines elektrischen Rasenmähers gemäß der vorliegenden Offenbarung aus unterschiedlichen Blickrichtungen;
- Figur 4:: Eine Seitenansicht des elektrischen Rasenmähers in einer Benutzungssituation;
- Figuren 5 u. 6:: Vergrößerte Schnittansichten durch das Fahrgehäuse des elektrischen Rasenmähers gemäß den Schnittlinien V und VI in Figur 4;
- Figur 7:: eine schematische Draufsicht auf einen elektrischen Rasenmäher zur Erläuterung der Beweglichkeiten der Räder und der Achsbezüge der Radachsen, der Lenkachse, der Schwenkachse sowie einer Kippachse.

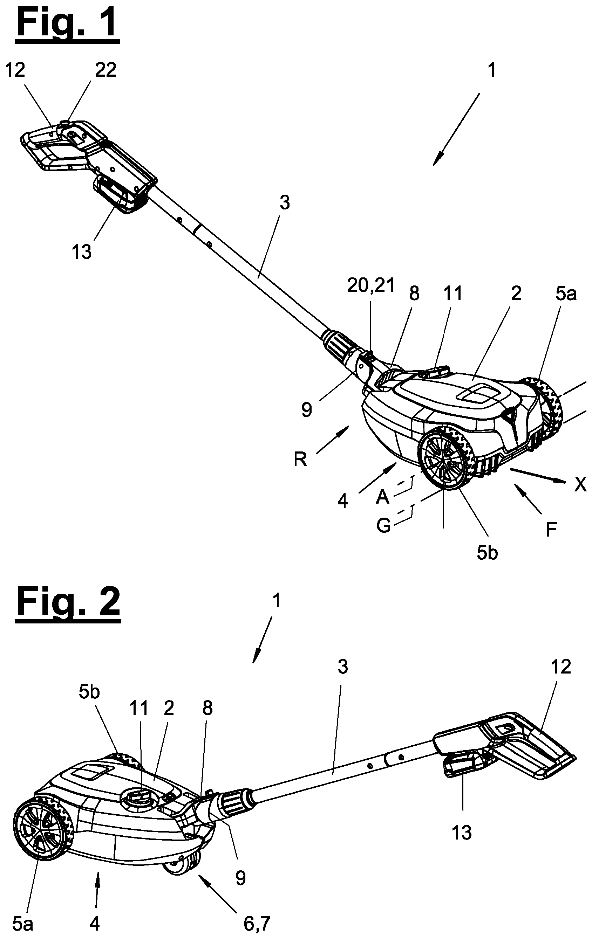

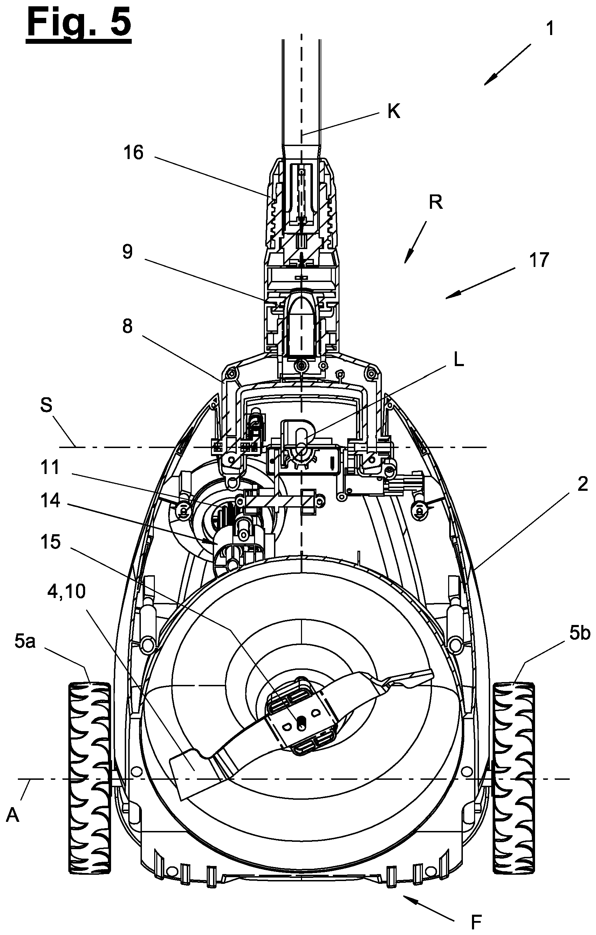

Figuren 1 bis 3 zeigen eine beispielhafte Ausführungsform des elektrischen Rasenmähers gemäß der vorliegenden Offenbarung. Dieser weist ein Mähwerk (4) auf, das in die Unterseite des Fahrgehäuses (2) integriert ist. Das Mähwerk (4) hat bevorzugt ein Schneidmesser (10), das in einer im Wesentlichen parallel zum Untergrund (U) liegenden Ebene angetrieben und rotierbar ist. Wie in Figur 5 in vergrößerter Darstellung ersichtlich weist das Schneidmesser (10) bevorzugt zwei oder mehr Schnittkanten auf, die an jeweils radialen Endbereichen des Schneidmessers (10) angeordnet sind. Im Mittelbereich des Schneidmessers (10) ist es bevorzugt über eine lösbare Verbindung mit der Mähwerkachse (15) verbunden.

Das Fahrgehäuse (2) des Rasenmähers (1) weist bevorzugt am Frontende (F) eine größere horizontale Breite und am Rückende (R) eine geringere horizontale Breite auf. Hierdurch wird das randbündige Mähen an kurvigen Begrenzungen einer Rasenfläche deutlich erleichtert. Die Breite am Rückende (R) kann insbesondere maximal 60% der Breite am Frontende (F) betragen, weiter insbesondere maximal 50% oder 40%.

Im horizontalen Querschnitt hat das Fahrgehäuse (2) bevorzugt eine sich trapezförmig oder tropfenförmig zum Rückende (R) verjüngende Form, was insbesondere in der Schnittansicht gemäß Figur 5 gut erkennbar ist. Die Außenkontur des Fahrgehäuses (2) kann im Wesentlichen symmetrisch zu einer vertikalen Ebene ausgebildet sein, die entlang der vorgesehenen Fahrtrichtung (X) verläuft.

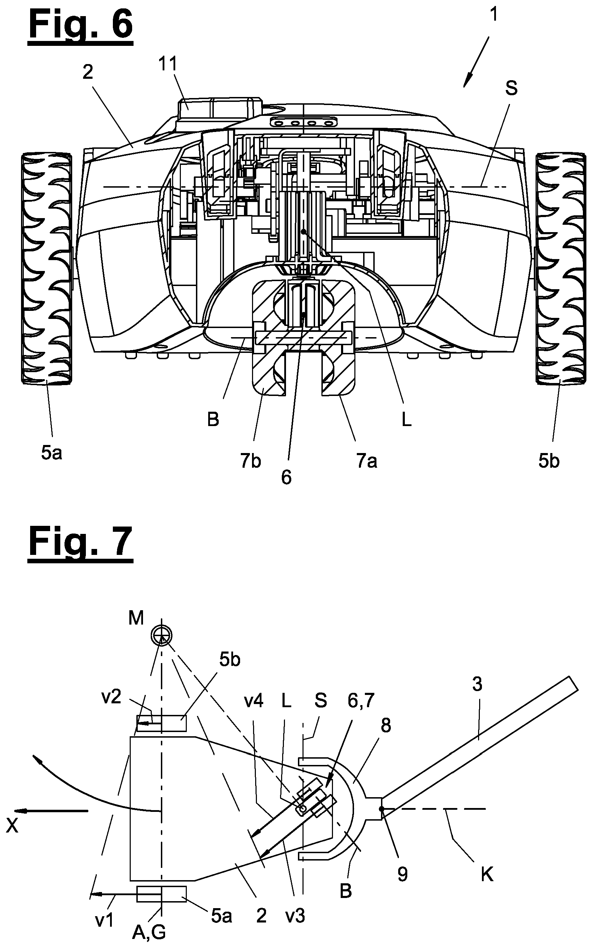

Figur 7 zeigt eine schematische Draufsicht auf das Fahrgehäuse (2) mit den am Frontende (F) angeordneten starren Vorderrädern (5a,5b) und dem mind. einem Hinterrad (7), das über den Nachlauf-Radträger (6) um eine vertikale Lenkachse (L) schwenkbar gegenüber dem Fahrgehäuse (2) gelagert ist. Die zweite Drehachse (B) des mindestens einen Hinterrads (7) verläuft nicht durch die Lenkachse (L), sondern ist gegenüber dieser um einen Achsversatz (D) windschief versetzt angeordnet. Durch diesen Achsversatz (D) nimmt das mindestens eine Hinterrad (7) bei jeder Fahrbewegung selbsttätig eine Stellung ein, bei der die zweite Drehachse (B) zum Momentanpol (M) des Rotationsanteils der Fahrbewegung hin ausgerichtet ist. Dieser Momentanpol (M) liegt im Wesentlichen auf einer gedachten Gerade (G), welche sich durch die Aufstandspunkte der starren Vorderräder (5a,5b) erstreckt. Bei einer reinen Rotation des Fahrgehäuses (2) um die Hochachse liegt der Momentanpol (M) genau in der Mitte zwischen den Vorderrädern (5a,5b). Bei einer Kurvenfahrt kommt der Momentanpol (M) je nach Kurvenradius weiter außen auf der Geraden (G) zu liegen. Das an dem lenkbaren Nachlauf-Radträger (6) drehbar gelagerte mindestens eine Hinterrad (7) kann sich damit jeder beliebigen Bewegung des Fahrgehäuses (2) in der Ebene anpassen und entsprechend ausrichten.

Der elektrische Rasenmäher (1) weist somit die definierte Kinematik eines Fahrzeugs mit Hinterachslenkung auf. Er kann unter ständiger Aufrechterhaltung der Radhaftung jegliche Fahrten in der Vorwärtsrichtung (X) sowie Kurvenfahrten ausführen, ist jedoch durch die Seitenführungskräfte zumindest der Vorderräder (5a,5b) gegen ein Wegrutschen in Richtung der Geraden (G) bzw. der ersten Drehachse (A) gesichert. Damit kann der elektrische Rasenmäher auch im Einhandbetrieb ohne größere Kraftanstrengung für Fahrten an zur Seite geneigten Hängen eingesetzt werden.

Eine bevorzugte Ausführungsvariante sieht vor, dass die Schwenkachse (S) des Bügelgelenks (8) am Fahrgehäuse (2) kreuzend zur Lenkachse (L) des Nachlauf-Radträgers (6) oder weiter in Richtung des Rückendes (R) angeordnet ist. Hierdurch wird eine Krafteinleitung von der Griffstange (3) zum Fahrgehäuse (2) auf einer Höhe entlang der vorgesehenen Fahrtrichtung (X) der Lenkachse (L) oder dahinter erzeugt. Somit werden im Wesentlichen quer zur vorgesehenen Fahrtrichtung (X) wirkende Anteile der manuell eingeleiteten Kraft weit überwiegend oder vollständig auf das Rückende (R) des Fahrgehäuses (2) übertragen, so dass sie zu einer entsprechenden Änderung des Radius der Kurvenbahn und zu einer Anpassung des Lenkwinkels des Nachlauf-Radträgers (6) führen, jedoch nicht oder kaum ein Querschieben über die erste Radachse (A) der Vorderräder (5a,5b) bewirken können.

Die Einzelgeschwindigkeiten (v1, v2, v3, v4) der Vorderräder (5a,5b) und des mind. einen Hinterrads (7) ergeben sich gemäß der Momentanpollehre im Wesentlichen proportional zum jeweiligen Abstand des Rades gegenüber der Lage des Momentanpols (M). Die Einzelradgeschwindigkeiten können sich dabei allesamt schlupffrei und damit unter vollständiger Beibehaltung der Seitenführungskräfte aller Räder aufbauen, wobei sich insgesamt eine Bewegung des Fahrgehäuses (2) mit beliebigen translatorischen Anteilen entlang der vorgesehenen Fahrtrichtung (X) und rotatorischen Anteilen um den Momentanpol (M) ergibt.

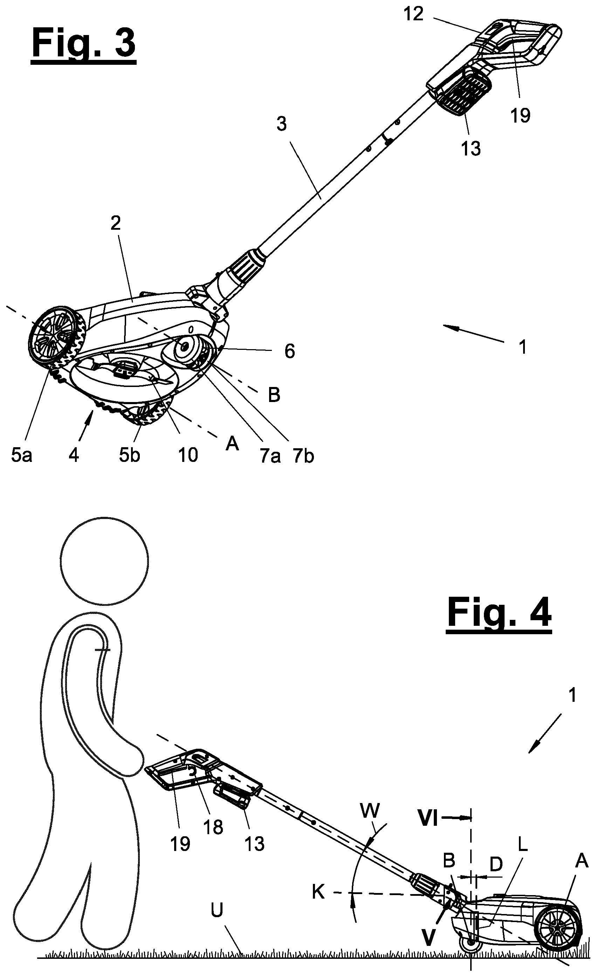

Das Kippgelenk (9) kann eine beliebige Ausbildung haben. Gemäß einer bevorzugten Ausführung ist vorgesehen, dass das Kippgelenk (9) eine Kurvensteuerachse (K) aufweist, die im Wesentlich senkrecht zur Schwenkachse (S) des Bügelgelenks (8) verläuft (vgl. Figur 5) und in einem spitzen Winkel (W) zur Längserstreckung der Griffstange (3) nach unten gekippt ist (vgl. Figur 4). Die vorstehende Richtungsangabe bezieht sich auf eine Ausrichtung der Griffstange (3) in deren vorgesehenen Mitten-Referenzlage. Die vorgesehene Mitten-Referenzlage ist in Figur 4 gezeigt und beschreibt eine Ausrichtung der Griffstange (3) für eine gerade Vorschubbewegung des Rasenmähers (1) auf horizontalem Untergrund (U) unter Führung durch eine stehende Bedienperson. Mit anderen Worten ist die Kurvensteuerachse (K) so ausgerichtet, dass sie in einem Referenzzustand von Rasenmäher (1) und Griffstange (3) im Wesentlichen horizontal und parallel zur vorgesehenen Fahrtrichtung (X), jedoch in einem spitzen Winkel zur Griffstange (3) verläuft, wobei der Referenzzustand vorsieht, dass der Rasenmäher (1) auf einem horizontalen Untergrund (U) steht und die Griffstange (3) in einer Vertikalebene gerade nach hinten hin ausgerichtet und gegenüber einer Horizontalebene schräg nach oben verlaufend ausgerichtet ist, insbesondere in Richtung einer Normalposition der Führungshand der Bedienperson auf dessen Hüfthöhe. Die Normalposition der Führungshand kann bei einer Höhe von 70 bis 90 Zentimeter oberhalb des Untergrunds (U), weiter insbesondere bei 80 Zentimeter oberhalb des Untergrunds (U) definiert sein.

Die vorgenannte Ausführung des Kippgelenks (9) hat verschiedene kinematische Vorteile. Einerseits kann durch eine (anteilige) Drehung der Griffstange (3) um deren Längserstreckung ein Lenkgefühl für die Bedienperson vermittelt werden, die gut mit den ausgelösten Rotationsanteilen in der Fahrbewegung des Rasenmähers (1) und insbesondere des Fahrgehäuses (2) korrespondiert. Wird beispielsweise ein am Ende der Griffstange (3) angeordneter Handgriff (12) im Uhrzeigersinn, d.h. nach rechts verdreht, führt dies durch die Lage der Kippachse (K) zu einem Einknicken der Schubverbindung zwischen der Griffstange (3) und dem Fahrgehäuse (2) bzw. dem Bügelgelenk (8), wobei Rückende des Fahrgehäuses (2) anfängt nach links auszuscheren und insgesamt eine Fahrbewegung des Fahrgehäuses (2) in einer Kurvenbahn nach rechts eingeleitet wird. Die Drehung des Handgriffs (12) nach rechts führt also zur Einleitung einer Fahrbewegung nach rechts. Die vorgenannten Richtungsbezüge basieren auf der Annahme einer Vorwärtsfahrt, d.h. eines translatorischen Bewegungsanteils des Rasenmähers entlang der vorgesehenen Fahrtrichtung (X).

Andererseits kann der vom Fahrgehäuse (2) wegweisende Teil der Griffstange (3) durch ein Verschwenken um die Kippachse (K) dem Untergrund (U) angenähert werden, so dass der Rasenmäher (1) mitsamt der Griffstange (3) eine minimale Höhe über dem Untergrund (U) einnimmt und beispielsweise in sehr niedrige Räume eingeschoben werden kann, wie sie häufig unterhalb von Gartenhäusern, Holzterrassen oder im direkten Anschlussbereich zu Büschen und Hecken vorzufinden sind.

Gemäß einer bevorzugten Ausführungsvariante beträgt die Höhe des Fahrgehäuses (2) maximal 60% weiter bevorzugt maximal 50% der größten Breitenerstreckung des elektrischen Rasenmähers (1), d.h. insbesondere der Breite am Frontende (F). Damit kann der elektrische Rasenmäher extrem niedrig bauen und ist für das Mähen an schwer zugänglichen Stellen besonders gut geeignet.

Eine bevorzugte Ausführungsform sieht weiter vor, dass der Rasenmäher (1) ein Bedienelement (11) für eine gemeinsame Höhenverstellung (14) des Mähwerks (4) gegenüber den Vorderrädern (5a,5b) und dem mindestens einen Hinterrad (7) aufweist. Das Bedienelement kann beispielsweise ein Drehrad sein, das an einer Oberseite des Fahrgehäuses (2) angeordnet ist und mit einem im Fahrgehäuse (2) vorgesehenen Getriebe zusammenwirkt, welches eine Anhebung oder Absenkung des Mähwerks (4) bewirkt. Die Anhebung oder Absenkung ist insbesondere einerseits an den Vorderrädern (5a,5b) und andererseits an dem mind. einem Hinterrad (7) gleich oder zueinander proportional.

Eine weitere bevorzugte Ausführung sieht vor, dass die Griffstange (3) abnehmbar ist. Dies ermöglicht ein besonders raumsparendes Verstauen des elektrischen Rasenmähers, beispielsweise im Fach eines Schranks im Wohnbereich, sowie einen leichten Transport. Bevorzugt ist eine Trennmöglichkeit im Kraftverlauf der Führungskraft der Griffstange (3) vor dem Bügelgelenk (8) vorgesehen, weiter insbesondere vor dem Kippgelenk (9). Gegebenenfalls können zwei oder mehr Trennmöglichkeiten vorgesehen sein.

Eine bevorzugte Ausführung sieht vor, dass an einem vom Fahrgehäuse (2) wegweisenden Ende der Griffstange (3) ein Handgriff (12) angeordnet ist und bevorzugt weiterhin ein Akku (13). In einem solchen Fall ist bevorzugt an jeder Trennmöglichkeit im Kraftverlauf der Führungskraft der Griffstange eine lösbare elektrische Verbindung, insbesondere eine Steckverbindung vorgesehen. Weiterhin sind bevorzugt geeignete biegsame oder rotierbare elektrische Verbindungen im Bereich der Schwenkachse (S) sowie der Kurvensteuerachse (K) vorgesehen. Diese können eine beliebige Ausbildung haben beispielsweise als ein flexibles Kabel oder als ein Schleifring.

Als besonders geeignet hat sich für die Trennung der Griffstange eine Steckhülse (16) herausgestellt. Dementsprechend ist die Griffstange (3) bevorzugt über eine Steckhülse (16) mit einer Gelenkanordnung (17) lösbar verbunden, wobei diese Gelenkanordnung (17) zumindest ein Element aus der Gruppe von Bügelgelenk (8) und Kippgelenk (9) umfasst.

Die Vorderräder (5a,5b) können nicht-angetriebene, d.h. frei drehbare Räder sein.

Gemäß einer alternativen Ausführung können die Vorderräder (5a,5b) zeitweise oder dauerhaft motorisch antreibbar sein.

Besonders bevorzugt können die Vorderräder (5a,5b) mit jeweils unterschiedlichen Radgeschwindigkeiten (v1,v2) antreibbar sein. Die unterschiedlichen Radgeschwindigkeiten (v1,v2) können sich entweder von selbst ergeben, in dem beispielsweise ein motorischer Antrieb über ein Raddifferential vorgesehen wird. Alternativ können die Radgeschwindigkeiten gesteuert oder geregelt vorgebbar sein.

Gemäß einer besonders bevorzugten Ausführungsform ist vorgesehen, dass ein Verhältnis zwischen den Radgeschwindigkeiten (v1,v2) in Abhängigkeit von einem momentanen Kippwinkel der Griffstange (3) um die Kurvensteuerachse (K) gesteuert oder geregelt vorgebbar ist. Alternativ oder zusätzlich kann ein Absolutwert der Radgeschwindigkeiten (v1,v2) auf Basis einer manuellen Eingabe an einem Eingabegerät (18) am Handgriff (12) gesteuert oder geregelt vorgebbar sein.

Der Handgriff (12) kann gemäß der Darstellung in Figur 4 beispielsweise ein Eingabegerät (18) aufweisen, das in der Art eines Pistolenabzugs ausgebildet ist. Das Eingabegerät (18) kann gegenüber einer Referenzlage in einer ersten Richtung ausgelenkt werden, um ein Antreiben der Vorderräder (5a,5b) entlang der vorgesehenen Fahrtrichtung (X) vorzugeben. Optional kann das Eingabegerät (18) in einer zweiten und insbesondere entgegengesetzten Richtung auslenkbar sein, um eine Bewegung in entgegengesetzter Richtung, d.h. entgegen der vorgesehenen Fahrtrichtung (X) bzw. eine Rückwärtsfahrt vorzugeben. Ein Absolutwert der Radgeschwindigkeiten (v1,v2) kann beispielsweise gemäß dem Maß der Auslenkung des Eingabegeräts (18) vorgegeben sein.

An dem Handgriff (12) kann alternativ oder zusätzlich eine Totmann-Taste (19) vorgesehen sein. Eine bevorzugte Ausführung sieht vor, dass zumindest eine der folgenden Funktionen bereitgestellt ist, während die Totmann-Taste (19) eingedrückt ist:
- Zulassen oder Vorgeben einer Betätigung des Mähwerks (4);
- Zulassen einer Radbewegung der Vorderräder (5a,5b), beispielsweise durch Lösen einer selbstschließenden Bremse.

Während die Totmann-Taste (19) nicht eingedrückt ist, kann entsprechend einerseits ein Betrieb des Mähwerks (4) ausgeschlossen oder unterbrochen sein und/oder eine Bewegung des Fahrgehäuses (2) über den Untergrund (U) gehemmt oder verhindert sein.

Die Betätigung des Eingabegeräts (18) kann zusätzlich zu dem Eindrücken des Totmann-Tasters (19) vorgesehen sein. Wenn das Eingabegerät (18) in der Referenzlage ist, können die Vorderräder (5a,5b) frei drehend bewegt sein. In diesem Zustand ist der elektrische Rasenmäher also so bedienbar, als wäre kein Fahrantrieb vorhanden.

Durch das überlagernde Betätigen des Eingabegeräts (18) kann eine unterstützende angetriebene Bewegung der Vorderräder (5a,5b) eingeleitet werden.

Gemäß einer weiteren Ausführungsform kann der elektrische Rasenmäher (1) einen Neigungssensor aufweisen. Ein gemäß dem momentanen Kippwinkel der Griffstange (3) vorgegebenes Verhältnis zwischen den Radgeschwindigkeiten (v1,v2) kann in Abhängigkeit von einer momentanen Neigung des Fahrgehäuses (2) adaptiert sein. Insbesondere kann auf Basis des Neigungssensors ein Kippwinkel (K) der Griffstange (3) gegenüber einer Vertikalebene berechnet werden, um auf Basis dieses berechneten Winkels ein Verhältnis zwischen den Radgeschwindigkeiten gesteuert oder geregelt vorzugeben.

Abwandlungen der Erfindung sind in verschiedener Weise möglich. In den Zeichnungen ist jeweils ein Nachlauf-Radträger (6) mit einem ersten Hinterrad (7a) und einem zweiten Hinterrad (7b) gezeigt. Alternativ kann nur ein einziges Hinterrad (7) vorgesehen sein.

Der elektrische Rasenmäher (1) weist bevorzugt genau einen Nachlauf-Radträger (6) auf. Die Lenkachse (L) ist bevorzugt in einer parallel zur vorgesehenen Fahrtrichtung (X) verlaufenden Mittelebene des Fahrgehäuses (2) bzw. zwischen den Vorderrädern (5a,5b) angeordnet.

Der Achsversatz (D) kann ein beliebiges Maß haben, er beträgt bevorzugt mind. 25% weitere bevorzugt mind. 50% des Durchmessers des mindestens einen Hinterrads (7).

Die Drehbewegung der Griffstange (3) um die Kurvensteuerachse (K) kann permanent freigegeben sein. Alternativ kann die Drehbewegung der Griffstange (3) temporär beschränkt oder arretiert sein, sodass Lenkbewegungen nur in einem verminderten Umfang oder keine Lenkbewegungen ermöglicht sind. Das Verhindern von Lenkbewegungen kann vorteilhaft sein, wenn der Rasenmäher temporär für das Mähen gerader Streifen eingesetzt werden soll. Das Beschränken der Lenkbewegungen, insbesondere auf einen vorgegebenen oder einstellbaren Lenkwinkelbereich, kann beispielsweise beim Mähen in Hanglagen vorteilhaft sein, um die Drehmomente zu beschränken, die an der Griffstange zu Vorgabe oder Aufrechterhaltung eines bestimmten Lenkwinkels aufzubringen sind.

Sperrvorrichtung (20) kann ein oder mehrere Betätigungselemente (21, 22) umfassen. Ein Betätigungselement (21, 22) der Sperrvorrichtung (20) kann bevorzugt an der Griffstange (3), insbesondere am Handgriff (12), und/oder am Kippgelenk (9), insbesondere am Bügelelement (8) angeordnet sein.

Eine bevorzugte Ausführung sieht vor, dass der Rasenmäher eine Sperrvorrichtung (20) umfasst, die dazu ausgebildet ist, das Kippgelenk (9) und/oder eine Drehbarkeit der Griffstange (3) um die Kurvensteuerachse (K) temporär zu beschränken oder zu arretieren.

Die Sperrvorrichtung kann teilweise oder vollständig gemäß der Darstellung in Figur 1 an dem Kippgelenk (9) angeordnet sein. Die Sperrvorrichtung (20) ist hier mit einem Betätigungselement in Form eines Schalters oder Schiebereglers ausgebildet, um die Sperrvorrichtung (20) manuell oder mit Kraftunterstützung durch einen Aktuator zu betätigen.

Die Sperrvorrichtung (20) ist bevorzugt dazu ausgebildet (und derart betätigbar), dass sie das Kippgelenk (9) in einer ersten Schaltposition arretiert und in einer zweiten Schaltposition freigibt und etwaig in Zwischenpositionen beschränkt. Die Schaltposition kann an einem oder an mehreren Betätigungselementen vorgebbar sein. Es kann zwei oder mehr Schaltposition vorgesehen sein, in denen das Kippgelenk (9) in unterschiedlicher Weise beschränkt oder arretiert ist.

Die Arretierung des Kippgelenks (9) und/oder der Drehbarkeit der Griffstange (3) um die Kurvensteuerachse (K) kann in einer beliebigen Lenkwinkellage, weiterhin in mindestens einer vorgegebenen Lenkwinkellage vorgesehen sein, besonders bevorzugt zumindest in einer Geradeausfahrt-Lenkwinkellage. Alternativ oder zusätzlich kann eine Arretierung in mindestens einer vorgegebenen, einstellbaren oder frei wählbaren Kurvenfahrt-Lenkwinkellage vorgesehen sein.

Ein Lenkwinkelbereich, auf den die Lenkbewegungen der Griffstange beschränkbar ist, kann einen beliebigen Winkelbereich abdecken. Bevorzugt kann ein definierter Winkelbereich zur linken UND zur rechten Seite einer Geradeausfahrt-Lenkwinkellage freigeben sein, während eine darüber hinausgehende Lenkbewegung blockiert ist. Alternativ kann ein definierter Winkelbereich zur linken ODER zur rechten Seite der Geradeausfahrt-Lenkwinkellage freigegeben sein.

Die Sperrvorrichtung kann gemäß einer bevorzugten Ausführung mindestens eine bevorzugt einstellbare Schaltposition zur Beschränkung des Kippgelenks und/oder zur Beschränkung der Lenkbewegung der Griffstange aufweisen und eine weitere Schaltposition zur Freigabe des Kippgelenks und/oder der Lenkbewegung der Griffstange für eine unbeschränkte Bewegung bzw. eine Bewegung unter Ausnutzung des maximalen Winkelbereichs des Kippgelenks. Darüber hinaus können eine oder mehrere Schaltpositionen für die Arretierung des Kippgelenks (9) und/oder der Drehbarkeit der Griffstange (3) vorgesehen sein.

Eine bevorzugte Ausführung sieht vor, dass über ein erstes Betätigungselement im Bereich des Kippgelenks (9) (zumindest) die Beschränkung der Lenkbewegung der Griffstange schaltbar oder einstellbar ist. Über ein zweites Betätigungselement im Bereich des Handgriffs ist (zumindest) die Arretierung des Kippgelenks (9) bzw. der Lenkbewegung der Griffstange aktivierbar. Die Arretierung ist bevorzugt zumindest in der Geradeausfahrt-Winkellage und/oder in zumindest einer (vorgegebenen, einstellbaren oder frei wählbaren) Kurvenfahrt-Winkellage aktivierbar.

Die Sperrvorrichtung (20) oder zumindest ein Betätigungselement (22) der Sperrvorrichtung (20) kann bevorzugt am Handgriff (12) angeordnet sein (nicht dargestellt).

### Bezugszeichen

- 1: Elektrischer Rasenmäher
- 2: Fahrgehäuse
- 3: Griffstange
- 4: Mähwerk
- 5a: Erstes Vorderrad, starr, d.h. nicht lenkbar
- 5b: Zweites Vorderrad, starr, d.h. nicht lenkbar
- 6: Nachlauf-Radträger
- 7: Hinterrad
- 7a: Hinterrad
- 7b: Hinterrad
- 8: Bügelgelenk
- 9: Kippgelenk
- 10: Schneidmesser
- 11: Bedienelement
- 12: Handgriff
- 13: Akku
- 14: Höhenverstellung
- 15: Mähwerkachse
- 16: Steckhülse
- 17: Gelenkanordnung
- 18: Eingabegerät
- 19: Totmann-Taste
- 20: Sperrvorrichtung
- 21: Erstes Betätigungselement
- 22: Zweites Betätigungselement
- A: Erste Drehachse Vorderräder
- B: Zweite Drehachse Hinterrad / Hinterräder
- D: Achsversatz
- F: Frontende
- G: Gerade durch Aufstandspunkte der Vorderräder
- K: Kurvensteuerachse
- L: Lenkachse (vertikal)
- M: Momentanpol
- R: Rückende
- S: Schwenkachse
- U: Untergrund
- v1,v2: Radgeschwindigkeit Vorderrad
- V3,v4: Radgeschwindigkeit Hinterrad / Hinterräder
- W: Winkel
- X: Vorgesehene Fahrtrichtung

## Patentansprüche

1. Elektrischer Rasenmäher (1), umfassend ein Fahrgehäuse (2) und eine gelenkig mit dem Fahrgehäuse (2) verbundene Griffstange (3), wobei das Fahrgehäuse (2) ein in der vorgesehen Fahrtrichtung (X) nach vorne weisendes Frontende (F) und ein nach hinten weisendes Rückende (R) hat, zwischen denen ein Mähwerk (4) angeordnet ist, wobei das Fahrgehäuse (2) am Frontende (F) zur linken Seite ein erstes starres Vorderrad (5a) und zur rechten Seite ein zweites starres Vorderrad (5b) aufweist, die jeweils um eine quer zur vorgesehenen Fahrtrichtung (X) ausgerichtete erste Drehachse (A) drehbar sind, und wobei die Griffstange (3) über ein Bügelgelenk (8) mit einer im wesentlichen horizontalen Schwenkachse (S) an dem Fahrgehäuse (2) schwenkbar gelagert ist, und wobei die Griffstange über ein Kippgelenk (9) mit dem Bügelgelenk (8) verbunden ist,
**dadurch gekennzeichnet, dass** das Fahrgehäuse (2) am Rückende (R) einen lenkbaren Nachlauf-Radträger (6) aufweist, der um eine vertikale Lenkachse (L) gegenüber dem Fahrgehäuse (2) schwenkbar gelagert ist, und wobei an dem Nachlauf-Radträger (6) mindestens ein Hinterrad (7) auf einer zweiten horizontalen Drehachse (B) drehbar gelagert ist, wobei die zweite Drehachse (B) an dem Nachlauf-Radträger (6) um einen Achsversatz (D) gegenüber der Lenkachse (L) windschief versetzt angeordnet ist.

2. Elektrischer Rasenmäher nach Anspruch 1, wobei das Mähwerk (4) ein Schneidmesser (10) aufweist, das in einer im Wesentlichen parallel zum Untergrund liegenden Ebene angetrieben rotierbar ist.

3. Elektrischer Rasenmäher nach einem der Ansprüche 1 oder 2, wobei der Rasenmäher (1) ein Bedienelement (11) für eine gemeinsame Höhenverstellung (14) des Mähwerks (4) gegenüber den Vorderrädern (5a, 5b) und dem mindestens einen Hinterrad (7, 7a, 7b) aufweist.

4. Elektrischer Rasenmäher nach einem der vorhergehenden Ansprüche, wobei das Fahrgehäuse (2) am Frontende (F) eine größere horizontale Breite und am Rückende (R) eine geringere horizontale Breite aufweist, wobei insbesondere
- die Breite am Rückende (R) insbesondere maximal 60% der Breite am Frontende (F) beträgt und/oder
- das Fahrgehäuse (2) im horizontalen Querschnitt eine sich trapezförmig oder tropfenförmig zum Rückende (R) verjüngende Form hat.

5. Elektrischer Rasenmäher nach einem der vorhergehenden Ansprüche, wobei die Schwenkachse (S) am Fahrgehäuse (2) kreuzend zur Lenkachse (L) des Nachlauf-Radträgers (6) oder weiter in Richtung des Rückendes (R) angeordnet ist.

6. Elektrischer Rasenmäher nach einem der vorhergehenden Ansprüche, wobei das Kippgelenk (9) eine Kurvensteuerachse (K) aufweist, die im Wesentlichen senkrecht zur Schwenkachse (S) des Bügelgelenks (8) verläuft und in einem spitzen Winkel (W) zur Längserstreckung der Griffstange (3) nach unten gekippt ist.

7. Elektrischer Rasenmäher nach einem der vorhergehenden Ansprüche, wobei die Griffstange (3) abnehmbar ist, wobei insbesondere eine Trennmöglichkeit im Kraftverlauf der Führungskraft der Griffstange vor dem Bügelgelenk (8) vorgesehen ist, weiter insbesondere vor dem Kippgelenk (9).

8. Elektrischer Rasenmäher nach einem der vorhergehenden Ansprüche, wobei die Griffstange (3) über eine Steckhülse (16) mit einer Gelenkanordnung (17) lösbar verbunden ist, wobei die Gelenkanordnung zumindest ein Element aus der Gruppe von Bügelgelenk (8) und Kippgelenk (9) umfasst.

9. Elektrischer Rasenmäher nach einem der vorhergehenden Ansprüche, wobei an einem vom Fahrkörper entfernten Ende der Griffstange (3) ein Handgriff (12) angeordnet ist und bevorzugt weiterhin ein Akku (13).

10. Elektrischer Rasenmäher nach einem der vorhergehenden Ansprüche, wobei die Vorderräder (5a, 5b) motorisch antreibbar ist, insbesondere mit jeweils unterschiedlichen Radgeschwindigkeiten (v1, v2), wobei weiter insbesondere
- ein Verhältnis zwischen den Radgeschwindigkeiten (v1, v2) in Abhängigkeit von einem momentanen Kippwinkel der Griffstange (3) um die Kurvensteuerachse (K) gesteuert oder geregelt vorgebbar ist; und/oder
- ein Absolutwert der Radgeschwindigkeiten (v1, v2) auf Basis einer manuellen Eingabe an einem Eingabegerät (18) am Handgriff (12) gesteuert oder geregelt vorgebbar ist.

11. Elektrischer Rasenmäher nach einem der vorhergehenden Ansprüche, wobei der Rasenmäher eine Sperrvorrichtung (20) umfasst, die dazu ausgebildet ist, das Kippgelenk (9) und/oder eine Drehbarkeit der Griffstange (3) um die Kurvensteuerachse (K) temporär zu beschränken und/oder zu arretieren.

12. Elektrischer Rasenmäher nach dem vorhergehenden Anspruch, wobei ein Betätigungselement (21, 22) der Sperrvorrichtung (20) an der Griffstange (3), insbesondere am Handgriff (12), und/oder am Kippgelenk (9), insbesondere am Bügelelement (8) angeordnet ist.

## Claims

1. Electric lawn mower (1) comprising a drive housing (2) and a handlebar (3) connected to the drive housing (2) in an articulated manner, wherein the drive housing (2) has a front end (F) pointing forward in the intended direction of travel (X) and a rear end (R) pointing backward, between which a mowing unit (4) is arranged, wherein the drive housing (2) has a first non-steerable front wheel (5a) on the left side at the front end (F) and a second non-steerable front wheel (5b) on the right side at the front end (F), each of which can rotate about a first axis of rotation (A) aligned transversely to the intended direction of travel (X), and wherein the handlebar (3) is pivotally mounted on the drive housing (2) via a hinge joint (8) with a substantially horizontal pivot axis (S) and wherein the handlebar is connected to the hinge joint (8) via a tilting joint (9),
**characterized in that**
the drive housing (2) has a steerable trailing caster (6) at the rear end (R), which is mounted so as to be pivotable about a vertical steering axis (L) relative to the drive housing (2), and wherein at least one rear wheel (7) is rotatably mounted on the trailing caster (6) on a second horizontal axis of rotation (B), wherein the second axis of rotation (B) is arranged on the trailing caster (6) at an axial offset (D) relative to the steering axis (L) in a skewed manner.

2. Electric lawn mower according to claim 1, wherein the mowing unit (4) has a cutting blade (10) that can be driven to rotate in a plane that is substantially parallel to the ground.

3. Electric lawn mower according to one of claims 1 or 2, wherein the lawn mower (1) has a control element (11) for a joint height adjustment (14) of the mowing unit (4) relative to the front wheels (5a, 5b) and the at least one rear wheel (7, 7a, 7b).

4. Electric lawn mower according to one of the preceding claims, wherein the drive housing (2) has a greater horizontal width at the front end (F) and a smaller horizontal width at the rear end (R), wherein, in particular,
- the width at the rear end (R) is, in particular, a maximum of 60% of the width at the front end (F) and/or
- the horizontal cross-section of the drive housing (2) has a trapezoidal or teardrop shape tapering towards the rear end (R).

5. Electric lawn mower according to one of the preceding claims, wherein the pivot axis (S) on the drive housing (2) is arranged crosswise to the steering axis (L) of the trailing caster (6) or further in the direction of the rear end (R).

6. Electric lawn mower according to one of the preceding claims, wherein the tilting joint (9) has a curve control axis (K) which runs essentially perpendicular to the pivot axis (S) of the hinge joint (8) and is tilted downwards at an acute angle (W) to the longitudinal extension of the handlebar (3).

7. Electric lawn mower according to one of the preceding claims, wherein the handlebar (3) is removable, wherein in particular a separation option is provided in the force line of the guiding force of the handlebar in front of the hinge joint (8), further in particular in front of the tilting joint (9).

8. Electric lawn mower according to one of the preceding claims, wherein the handlebar (3) is detachably connected to a joint arrangement (17) via a plug sleeve (16), wherein the joint arrangement comprises at least one element from the group consisting of a hinge joint (8) and a tilting joint (9).

9. Electric lawn mower according to one of the preceding claims, wherein a handle (12) is arranged at one end of the handlebar (3) remote from the drive unit and, preferably, a battery (13) is also arranged there.

10. Electric lawn mower according to one of the preceding claims, wherein the front wheels (5a, 5b) are motor-driven, in particular with respectively different wheel velocities (v1, v2), wherein furthermore, in particular
- a ratio between the wheel velocities (v1, v2) can be controlled or regulated as a function of a current tilt angle of the handlebar (3) around the curve control axis (K); and/or
- an absolute value of the wheel velocities (v1, v2) can be controlled or regulated on the basis of a manual input on an input device (18) on the handle (12).

11. Electric lawn mower according to one of the preceding claims, wherein the lawn mower comprises a locking mechanism (20) which is designed to temporarily restrict and/or lock the tilting joint (9) and/or the rotatability of the handlebar (3) about the curve control axis (K).

12. Electric lawn mower according to the preceding claim, wherein an actuator (21, 22) of the locking mechanism (20) is arranged on the handlebar (3), in particular on the handle (12), and/or on the tilting joint (9), in particular on the hinge element (8).

## Revendications

1. Tondeuse à gazon électrique (1), comprenant un châssis (2) et une barre de préhension (3) reliée de manière articulée au châssis (2), le châssis (2) ayant une extrémité avant (F) orientée vers l'avant dans la direction de déplacement prévue (X) et une extrémité arrière (R) orientée vers l'arrière, entre lesquelles est agencé un mécanisme de coupe (4), le châssis (2) présentant, à l'extrémité avant (F), une première roue avant rigide (5a) sur le côté gauche et une deuxième roue avant rigide (5b) sur le côté droit, qui peuvent tourner chacune autour d'un premier axe de rotation (A) orienté transversalement par rapport à la direction de déplacement prévue (X), et la barre de préhension (3) étant montée de manière pivotante sur le châssis (2) par l'intermédiaire d'une articulation en étrier (8) avec un axe de pivotement (S) essentiellement horizontal, et la barre de préhension étant reliée à l'articulation en étrier (8) par l'intermédiaire d'une articulation basculante (9),
**caractérisé en ce que** le châssis (2) présente, à l'extrémité arrière (R), un support de roue suiveuse orientable (6), qui est monté de manière pivotante par rapport au châssis (2) autour d'un axe de direction vertical (L), et au moins une roue arrière (7) étant montée de manière rotative sur le support de roue suiveuse (6) sur un deuxième axe de rotation horizontal (B), le deuxième axe de rotation (B) étant agencé sur le support de roue suiveuse (6) de manière décalée de travers d'un décalage d'axe (D) par rapport à l'axe de direction (L).

2. Tondeuse à gazon électrique selon la revendication 1, dans laquelle le mécanisme de coupe (4) présente une lame de coupe (10) qui peut être entraînée en rotation dans un plan essentiellement parallèle au sol.

3. Tondeuse à gazon électrique selon l'une quelconque des revendications 1 ou 2, la tondeuse à gazon (1) présentant un élément de commande (11) pour un réglage commun de la hauteur (14) du mécanisme de coupe (4) par rapport aux roues avant (5a, 5b) et à l'au moins une roue arrière (7, 7a, 7b).

4. Tondeuse à gazon électrique selon l'une quelconque des revendications précédentes, dans laquelle le châssis (2) présente une largeur horizontale plus importante à l'extrémité avant (F) et une largeur horizontale plus réduite à l'extrémité arrière (R), notamment
- la largeur à l'extrémité arrière (R) étant notamment au maximum de 60 % de la largeur à l'extrémité avant (F) et/ou
- le châssis (2) ayant, en coupe transversale horizontale, une forme trapézoïdale ou en goutte qui se rétrécit vers l'extrémité arrière (R).

5. Tondeuse à gazon électrique selon l'une quelconque des revendications précédentes, dans laquelle l'axe de pivotement (S) est agencé sur le châssis (2) de manière à croiser l'axe de direction (L) du support de roue suiveuse (6) ou plus loin en direction de l'extrémité arrière (R).

6. Tondeuse à gazon électrique selon l'une quelconque des revendications précédentes, dans laquelle l'articulation basculante (9) présente un axe de commande de courbe (K) qui s'étend essentiellement perpendiculairement à l'axe de pivotement (S) de l'articulation en étrier (8) et qui est incliné vers le bas selon un angle aigu (W) par rapport à l'extension longitudinale de la barre de préhension (3).

7. Tondeuse à gazon électrique selon l'une quelconque des revendications précédentes, dans laquelle la barre de préhension (3) peut être retirée, une possibilité de séparation étant notamment prévue dans le sens de la force de guidage de la barre de préhension avant l'articulation en étrier (8), plus particulièrement avant l'articulation basculante (9).

8. Tondeuse à gazon électrique selon l'une quelconque des revendications précédentes, dans laquelle la barre de préhension (3) est reliée de manière amovible à un agencement d'articulation (17) par l'intermédiaire d'un manchon enfichable (16), l'agencement d'articulation comprenant au moins un élément choisi du groupe comprenant une articulation en étrier (8) et une articulation basculante (9).

9. Tondeuse à gazon électrique selon l'une quelconque des revendications précédentes, dans laquelle une poignée (12) est agencée à une extrémité de la barre de préhension (3) éloignée du châssis et de préférence également une batterie (13).

10. Tondeuse à gazon électrique selon l'une quelconque des revendications précédentes, dans laquelle les roues avant (5a, 5b) peuvent être entraînées par un moteur, notamment à des vitesses de roue différentes (v1, v2), et plus particulièrement
- un rapport entre les vitesses des roues (v1, v2) pouvant être prédéfini de manière commandée ou régulée en fonction d'un angle d'inclinaison instantané de la barre de préhension (3) autour de l'axe de commande de courbe (K) ; et/ou
- une valeur absolue des vitesses de roue (v1, v2) peut être prédéfinie de manière commandée ou régulée sur la base d'une saisie manuelle sur un dispositif de saisie (18) sur la poignée (12).

11. Tondeuse à gazon électrique selon l'une quelconque des revendications précédentes, la tondeuse à gazon comprenant un dispositif de blocage (20) qui est réalisé pour limiter et/ou bloquer temporairement l'articulation basculante (9) et/ou la capacité de rotation de la barre de préhension (3) autour de l'axe de commande de courbe (K).

12. Tondeuse à gazon électrique selon la revendication précédente, dans laquelle un élément d'actionnement (21, 22) du dispositif de blocage (20) est agencé sur la barre de préhension (3), notamment sur la poignée (12), et/ou sur l'articulation basculante (9), notamment sur l'élément en étrier (8).
